# EUROPÄISCHE PATENTSCHRIFT

(11) **EP 2 721 954 B1**
(45) Veröffentlichungstag und Bekanntmachung des Hinweises auf die Patenterteilung: **31.01.2018**
(21) Anmeldenummer: 13186580.0
(22) Anmeldetag: 30.09.2013
(51) Int. Cl.: A47B 47/04, A47B 87/02

(54) **Modulares Möbelsystem**
Modular furniture system
Système de meuble modulaire

(30) Priorität: 17.10.2012 DE 202012103971 U
(43) Veröffentlichungstag der Anmeldung: 23.04.2014
(73) Patentinhaber: Sedus Systems GmbH, 59590 Geseke (DE)
(72) Erfinder: Schiermeier, Horst, 33102 Paderborn (DE)
(74) Vertreter: Meinke, Jochen

(56) Entgegenhaltungen:
- WO-A1-2013/091636
- DE-U1- 8 620 277
- FR-A- 1 485 831
- US-A- 4 467 924

## Beschreibung

Die Erfindung betrifft ein modulares Möbelsystem, welches wenigstens zwei miteinander lösbar verbindbare, kastenförmige Elemente aufweist mit den Merkmalen des Oberbegriffes des Patentanspruches 1.
Aus DE 201 00 302 U1 ist ein modulares Möbelsystem in Schrank- oder Regalform bekannt. Dieses Möbelsystem weist wenigstens zwei kastenförmige Elemente auf, wobei die kastenförmigen Elemente an den Außenseiten in einem einheitlichen Raster Einstecköffnungen für Verbindungszapfen aufweisen, die es ermöglichen, jeweils zwei kastenförmige Elemente direkt in drei Raumachsen miteinander zu verbinden. Dies ermöglicht es grundsätzlich, aus einer beliebigen Vielzahl von kastenförmigen Elementen, die geometrisch unterschiedlich gestaltet sein können, je nach Bedarf auf einfache Weise beliebige Möbelsysteme zu erstellen.Die einzelnen kastenförmigen Elemente können sowohl übereinander, nebeneinander als auch hintereinander gekoppelt werden. Dadurch lassen sich ohne Zusatzelemente allein aus den kastenförmigen Elementen beliebig viele unterschiedliche Möbel realisieren. Dies ist sowohl im Privatbereich als auch insbesondere im gewerblichen Bereich, beispielsweise in Großraumbüros, von großem Vorteil, da auf diese Weise quasi aus einem Baukasten einfach verschiedene Schrank- bzw. Regalsysteme erstellt werden können, indem entsprechend die jeweiligen kastenförmigen Elemente direkt miteinander verbunden werden. Auch eine spätere Änderung des so geschaffenen Möbel ist ohne Weiteres möglich, indem entsprechende kastenförmige Elemente entfernt oder ausgetauscht oder in anderer Weise kombiniert werden.
Bietet dieses bekannte Möbelsystem im Hinblick auf seinen modularen Aufbau somit gegenüber herkömmlichen Möbelsystemen, die nur beschränkt verändert werden können, schon Vorteile, so ist dieses bekannte Möbelsystem jedoch von seiner Gestaltung her noch Einschränkungen unterworfen, da die einzelnen kastenförmigen Elemente jeweils direkt miteinander verbunden werden müssen, d.h. es ist z.B. nicht möglich, kastenförmige Elemente im Abstand zueinander zu positionieren.

Aus US 4 467 924 A ist ein Möbelsystem mit den Merkmalen des Oberbegriffes des Patentanspruches 1 bekannt. Dieses Möbelsystem ist als Schieberegalanlage ausgebildet.

Aufgabe der Erfindung ist es, ein solches Möbelsystem so zu verbessern, dass die Variationsmöglichkeit deutlich erhöht wird.

Diese Aufgabe wird bei einem modularen Möbelsystem der eingangs bezeichneten Art durch die kennzeichnenden Merkmale des Patentanspruches 1 gelöst.

Durch diese Gestaltung ist es im Unterschied zum Stand der Technik möglich, Möbelsysteme zu schaffen, bei denen die kastenförmigen Elemente nicht zwingend direkt nebeneinander angeordnet sein müssen, sondern voneinander beabstandet sein können. Zentraler Bestandteil hierfür ist der wenigstens eine Möbelboden mit durchgängigem Verriegelungsprofil. Zum Schaffen eines individuellen Möbels wird wenigstens ein Möbelboden ausgewählt und auf diesem Möbelboden werden an grundsätzlich beliebiger Stelle kastenförmige Elemente angeordnet und mit einem jeweiligen Verriegelungselement verriegelt, welches einfach nur durch eine Öffnung im kastenförmigen Element verriegelnd in das Verriegelungsprofil des Möbelbodens eingeführt wird. Auf umgekehrte Weise ist entsprechend auch ein Entriegeln einfach durchzuführen. Bevorzugt sind wenigstens zwei Möbelböden vorgesehen, so dass die kastenförmigen Elemente sowohl an der Unter- als auch an der Oberseite durch einen Möbelboden abgeschlossen und an diesem verriegelt sind. Dies erhöht nicht nur die Stabilität des Möbels, sondern verbessert auch das optische Erscheinungsbild und schafft zusätzlichen (Regal)stauraum zwischen beabstandeten kastenförmigen Elementen.

Um eine besonders handhabungsfreundliche Verriegelung zu gewährleisten, ist das Verriegelungsprofil C-förmig, d.h. als C-Profil ausgebildet. Das Verriegelungselement kann dann in einer Verdrehposition in das Verriegelungsprofil eingesteckt und durch Verdrehen verriegelt werden, so dass die Verriegelung besonders einfach ist. Um eine einfache Verriegelung zu erreichen, weist das Verriegelungselement am vorderen, in das Verriegelungsprofil eingreifenden Ende einen beidseitigen Rastvorsprung auf, welcher durch Verdrehen des Verriegelungselementes (um z.B. 90°) ein Einführen in das bzw. Verriegeln im Verriegelungsprofil ermöglicht. Um die Handhabung des jeweiligen Verriegelungselement zu erleichtern und eine optisch ansprechende Integration des Verriegelungselementes in das jeweilige kastenförmige Element zu erreichen, ist in die jeweilige Öffnung in der Ober- und/oder Unterwand des jeweiligen kastenförmigen Elementes eine Führungshülse für das Verriegelungselement eingesetzt. Diese Führungshülse kann z.B. ebenfalls aus Kunststoff bestehen. Sie ist bevorzugt so gestaltet, dass in verriegelter Lage das Verriegelungselement in der jeweiligen Führungshülse bündig aufgenommen ist, so dass es nicht über die entsprechende Innenwandfläche des kastenförmigen Elementes hinaussteht.

Damit ein Möbelboden sowohl an seiner Unterseite als auch an seiner Oberseite mit kastenförmigen Elementen verbunden werden kann, ist dabei bevorzugt vorgesehen, dass das Verriegelungsprofil Doppel-C-förmig ausgebildet ist.

Ferner ist bevorzugt vorgesehen, dass der jeweilige Möbelboden aus wenigstens zwei in Längsrichtung über das Verriegelungsprofil miteinander verbundenen Teilböden besteht, wobei besonders bevorzugt das Verriegelungsprofil an den beiden, den Teilböden zugewandten Seiten jeweils Verbindungsstege oder - zapfen für den jeweiligen Teilboden aufweist. Durch diese Gestaltung lässt sich der jeweilige Möbelboden als zentraler Bestandteil des Möbelsystems besonders einfach und wirtschaftlich herstellen. Er besteht aus dem Verriegelungsprofil und zwei damit verbundenen Teilböden und kann selbstverständlich in unterschiedlichen Abmessungen, insbesondere Längen, bereitgestellt werden.

Dabei ist das Verriegelungselement bevorzugt derart gestaltet, dass es in verriegelter Lage form- und kraftschlüssig im Verriegelungsprofil gehalten ist. Dazu kann das Verriegelungselement, das z.B. aus Kunststoff besteht, mit einem Federelement ausgerüstet sein, wobei das Federelement in verriegelter Lage entgegen der Federwirkung zusammengedrückt wird.

In bevorzugter Ausgestaltung ist vorgesehen, dass die Tiefe des jeweiligen Möbelbodens der Tiefe des jeweiligen kastenförmigen Elementes entspricht. Bei dieser Gestaltung deckt somit der Möbelboden über der gesamten Tiefe das jeweilige kastenförmige Element nach oben oder nach unten ab.

Hinsichtlich der Ausgestaltung der kastenförmigen Elemente bestehen grundsätzlich eine Vielzahl von Variationsmöglichkeiten. Bevorzugt ist vorgesehen, dass die Breite des jeweiligen kastenförmigen Elementes der Tiefe oder einer ganzzahligen Vielzahl der Tiefe des kastenförmigen Elementes entspricht. Wenn die Breite und die Tiefe des kastenförmigen Elementes übereinstimmen, d.h. die Grundfläche quadratisch ist, ist es grundsätzlich auch möglich, am Ende eines jeweiligen Möbelbodens das dort vorgesehene kastenförmige Element in unterschiedlicher Lage, d.h. um 90° verdreht, einzubauen, so dass es entweder von der Schmalseite oder von der Längsseite des Möbelsystems erreichbar ist. Dadurch wird die Variationsmöglichkeit weiter erhöht.

Das Verriegelungsprofil des untersten Möbelbodens bietet außerdem die Möglichkeit, auf besonders einfache Weise Möbelfüße zu befestigen. Dazu ist bevorzugt vorgesehen, dass in das unterseitige Verriegelungsprofil des untersten Möbelbodens wenigstens zwei Fußelemente eingesetzt sind, wobei jedes Fußelement einen Querträger mit endseitigen Füßen und wenigstens einen mittigen Verbindungszapfen zum Einsetzen in das Verriegelungsprofil aufweist.

Die Erfindung ist nachstehend anhand der Zeichnung beispielhaft näher erläutert. Diese zeigt in
- Fig. 1: eine perspektivische Ansicht eines Ausführungsbeispieles eines ererfindungsgemäßen Möbelsystemes von oben,

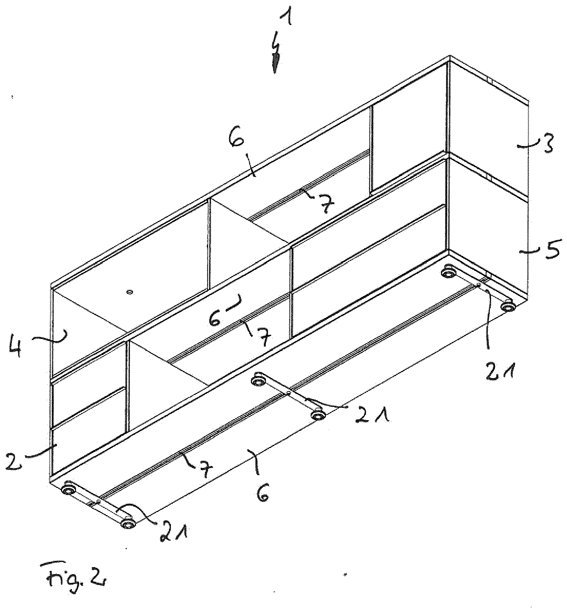

- Fig. 2: eine perspektivische Ansicht des Möbelsystems nach Fig. 1 von unten,

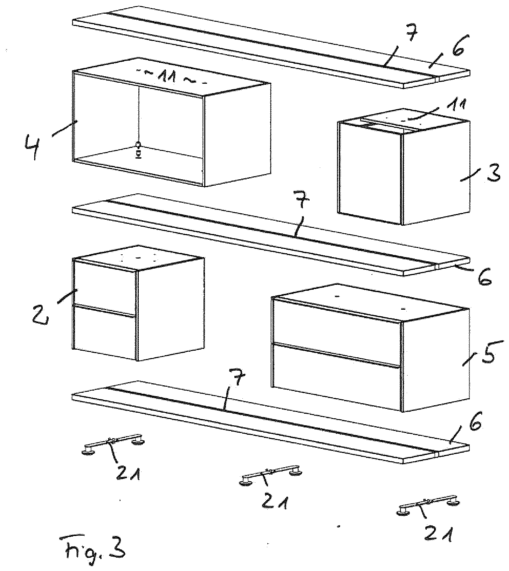

- Fig. 3: eine Explosionsdarstellung des Möbelsystems nach Fig. 1 und 2,
- Fig. 4: einen Querschnitt durch einen Möbelboden und angrenzende Bereiche eines zugeordneten kastenförmigen Elementes,
- Fig. 5: eine perspektivische Explosionsdarstellung eines Verriegelungszapfens mit Führungshülse,

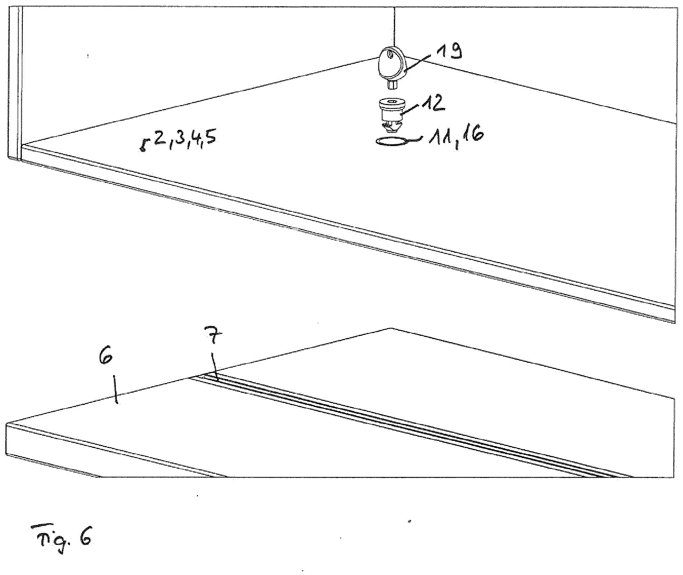

- Fig. 6: eine bereichsweise Explosionsdarstellung einer Montageposition während des Verbindens eines kastenförmigen Elementes mit einem Möbelboden,
- Fig.7: eine Darstellung analog zur Figur 6 am Abschluss der Verriegelung und in
- Fig. 8: eine perspektivische Explosionsdarstellung eines Fußelementes des Möbelsystems.

In den Zeichnungen ist ein beispielhaft dargestelltes Möbelsystem allgemein mit 1 bezeichnet. Dieses dargestellte Möbelsystem 1 stellt nur ein Ausführungsbeispiel dar, das Möbelsystem 1 lässt aufgrund seiner nachfolgend näher beschriebenen Ausgestaltung eine Vielzahl von verschiedenen zusammengesetzten Möbeln zu.

Beim dargestellten Ausführungsbeispiel weist das Möbelsystem 1 vier kastenförmige Elemente 2, 3, 4, 5 auf. Dabei stimmen die geometrischen Abmessungen der kastenförmigen Elemente 2 und 3 überein, sie weisen nämlich eine quadratische Grundfläche auf, d.h. die Breite und die Tiefe stimmen überein. Die kastenförmigen Elemente 4 und 5 sind dagegen doppelt so breit, d.h. die Breite ist zweimal so groß wie die Tiefe. Die Höhe sämtlicher kastenförmigen Elemente 2, 3, 4, 5 ist übereinstimmend. Sie kann z.B. der Tiefe der kastenförmigen Elemente entsprechen. Die kastenförmigen Elemente 2, 3, 4, 5 können offen sein, so wie dies beim kastenförmigen Element 4 dargestellt ist, oder verschließbar, z. B. durch eine Klappe 3a bzw. Schubladen oder Schubkästen 2a, 5a. Ferner können sie auf der Rückseite durch eine Rückwand verschlossen sein.

Wesentlich für das erfindungsgemäße Möbelsystems 1 ist die Art der Verbindung der kastenförmigen Elemente 2, 3, 4, 5. Dazu weist das Möbelsystem 1 beim dargestellten Ausführungsbeispiel drei identisch ausgestaltete Möbelböden 6 auf, welche unterhalb der kastenförmigen Elemente 2 und 5, zwischen den kastenförmigen Elementen 2 und 5 bzw. 3 und 4 sowie oberhalb der kastenförmigen Elemente 3 und 4 angeordnet sind.

Diese Möbelböden 6 dienen als Verbindungselemente für die verschiedenen kastenförmigen Elemente 2, 3, 4, 5 und als unterer bzw. oberer Abschluss des gesamten Möbelsystems 1.

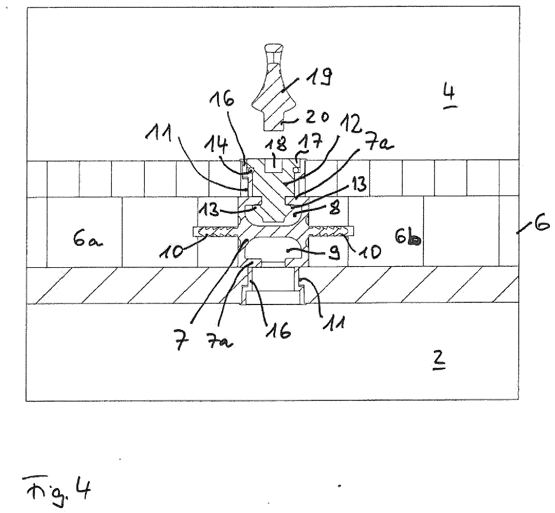

Wie am besten aus Fig. 4 hervorgeht, weist jeder Möbelboden 6 entlang seiner Längserstreckung wenigstens ein Verriegelungsprofil 7 auf, welches vorzugsweise als Doppel-C-Profil ausgebildet ist. Dieses Doppel-C-Profil 7 bildet somit eine obere Nut 8 und eine untere Nut 9 am jeweiligen Möbelboden 6, wobei die jeweilige Nut 8, 9 zur Außenseite hin über die jeweiligen C-Stege 7a schlitzförmig verengt ist.

Durch diese Gestaltung des Verriegelungsprofils 7 kann der jeweilige Möbelboden 6 sowohl an seiner Ober- als auch an seiner Unterseite mit kastenförmigen Elementen 2, 3, 4, 5 verbunden werden. Alternativ könnte der Möbelboden 6 aber auch nur ein C-förmiges Verriegelungsprofil aufweisen und wäre dann nur einseitig mit kastenförmigen Elementen zu verbinden.

Wie zeichnerisch dargestellt, weist bevorzugt der jeweilige Möbelboden 6 nur ein durchgängiges Verriegelungsprofil 7 auf, welches sich zentral über der gesamten Länge des Möbelbodens 6 erstreckt und diesen sozusagen in zwei Hälften unterteilt. Der Möbelboden 6 besteht nämlich bevorzugt aus wenigstens zwei in Längsrichtung über das Verriegelungsprofil 7 miteinander verbundenen Teilböden 6a, 6b. Um eine einfache Verbindung der beiden Teilböden 6a, 6b zur Bildung des Möbelbodens 6 zu erreichen, weist bevorzugt das Verriegelungsprofil 7 an den den beiden Teilböden 6a, 6b zugewandten Seiten jeweils Verbindungsstege oder -zapfen 10 für den jeweiligen Teilboden 6a, 6b auf.

Um ein jeweiliges kastenförmiges Element 2, 3, 4, 5 am Möbelboden 6 bzw. dem Verriegelungsprofil 7 des Möbelbodens 6 befestigen zu können, weist jedes kastenförmige Element 2, 3, 4, 5, 6 im Ober- und Unterboden jeweils wenigstens eine Öffnung 11 für ein Verriegelungselement 12 auf. Dieses Verriegelungselement 12 dient zum Hindurchstecken durch die entsprechende Öffnung 11 und zum Eingreifen in das Verriegelungsprofil 7 des jeweiligen Möbelbodens 6.

Das Verriegelungselement 12 ist bevorzugt so gestaltet, dass es am vorderen, in das Verriegelungsprofil 7 eingreifenden Ende einen beidseitigen Rastvorsprung 13 aufweist, welcher in einer Winkellage des Verriegelungselementes 12 ein Einführen in die Nut 8 bzw. 9 des Verriegelungsprofils 7 ermöglicht und ein Verriegeln desselben durch Verdrehen, derart, dass, wie in Fig. 4 gezeigt, die beidseitigen Rastvorsprünge 13 hinter die C-Stege 7a des Verriegelungsprofils 7 greifen.

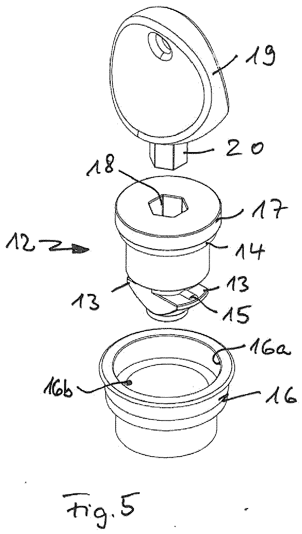

Dabei ist das jeweilige Verriegelungselement 12 bevorzugt so gestaltet, dass es in verriegelter Lage form- und kraftschlüssig im Verriegelungsprofil 7 gehalten ist. Dazu weist das Verriegelungselement 12 angrenzend an einem rückseitigen Bund 17 z.B. einen Federring 14 auf und kann mit zusätzlichen Rastnasen 15 an den beiden Rastvorsprüngen 13 versehen sein (Fig. 5).

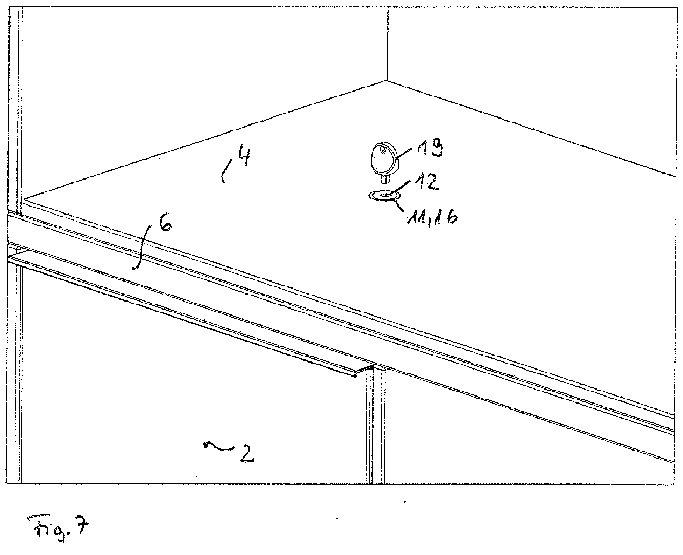

Um eine einfache Handhabung des jeweiligen Verriegelungselementes 12 zu gewährleisten, ist in die jeweilige Öffnung 11 in der Ober- und Unterwand des jeweiligen kastenförmigen Elementes 2, 3, 4, 5 eine Führungshülse 16 eingesetzt (Fig. 5), die so gestaltet ist, dass in verriegelter Position (Fig. 7) der Bund 17 des jeweiligen Verriegelungselementes 12 bündig mit der zugeordneten Bodenfläche des kastenförmigen Elementes 2, 3, 4, 5 anliegt. Dazu weist die Führungshülse 16 einen ersten Bereich 16a mit größerem Innendurchmesser und einen daran anschließenden zweiten Bereich 16b mit kleinerem Innendurchmesser auf.

Um das jeweilige Verriegelungselement 12 einfach um 90° verdrehen zu können, um es in die verriegelte oder entriegelte Lage zu bringen, ist im Bund 17 des Verriegelungselementes beispielsweise eine Sechskant-Bohrung 18 vorgesehen, in die ein einfacher Sechskant-Stift oder ein Betätigungswerkzeug 19 mit einem Sechskantstiftansatz 20 eingesteckt werden kann.

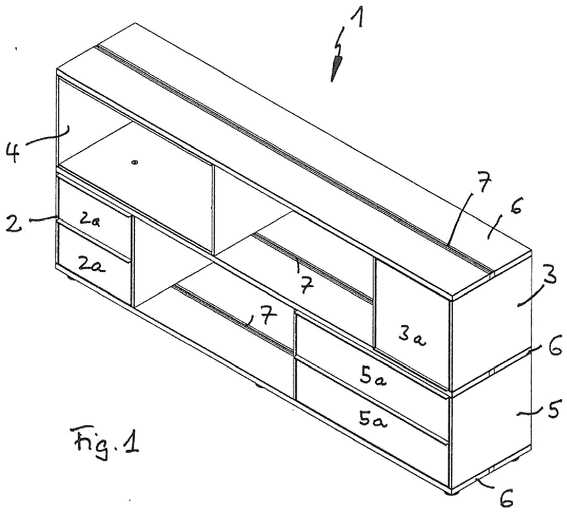

Durch diese Gestaltung des Möbelsystems ist es erkennbar auf einfache Weise möglich, aus einer geringen Anzahl von Grundkomponenten, nämlich Möbelböden 6, die ggf. in unterschiedlichen Längen bereit gehalten werden, und kastenförmigen Elementen 2, 3, 4, 5, 6 eine große Vielzahl unterschiedlicher Möbelstücke quasi aus einem Baukasten zu schaffen, indem das jeweilige kastenförmige Element auf einem Möbelboden 6 an der gewünschten Stelle platziert und in der vorbeschrieben Weise verriegelt wird. Wenn das kastenförmige Element 2, 3 eine quadratiche Grundfläche aufweist, kann es an den Enden des Möbelstückes, wie in Fig. 1 dargestellt, grundsätzlich auch in zwei Winkelpositionen eingebaut werden, nämlich einmal so, dass die offene Seite parallel zur Längsseite des Möbelstückes angeordnet ist, oder um 90° versetzt dazu, so dass die offene Seite an der kurzen Seite des Möbelstückes liegt. Dadurch wird die Variationsmöglichkeit weiter erhöht.

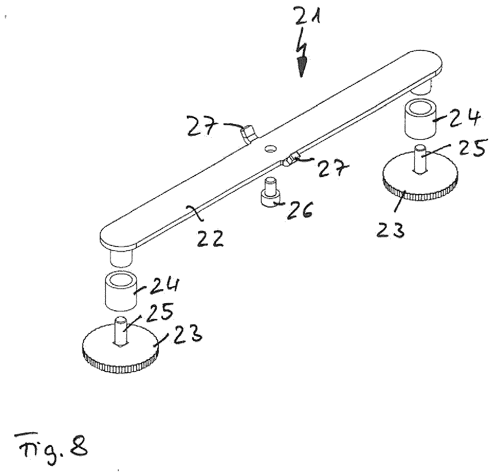

Die Gestaltung der Möbelböden 6 mit dem dargestellten Verriegelungsprofil 7 ermöglicht auch eine einfache Gestaltung von Möbelfüßen. Wie aus Fig. 8 hervorgeht, sind dazu Fußelemente 21 vorgesehen, wobei jedes Fußelement 21 einen Querträger 22 mit endseitigen Füßen 23 aufweist, welche über Schraubhülsen 24 und Schraubstifte 25 bevorzugt höhenverstellbar ausgebildet sein können. Ferner weist jeder Querträger 22 in seiner Mitte ein mittiges Verbindungselement (z. B. Schraube) 26 und bevorzugt zwei weitere äußere Zapfenelemente 27 auf, die zur Arretierung bzw. Befestigung einfach von unten in die untere Nut 9 des unteren Möbelbodens 6 eingesteckt werden.

Die Verriegelungsprofile 7 in den Möbelböden 6 dienen nicht nur zur Befestigung des jeweiligen kastenförmigen Elementes 2, 3, 4, 5 am jeweiligen Möbelboden 6, sondern sind auch dazu geeignet, Zwischenwände aufzunehmen, die einfach in die jeweilige Nut 8 bzw. 9 des Verriegelungsprofils 7 eingesteckt werden. Dies ist zeichnerisch nicht dargestellt. Auch auf dem obersten Möbelboden 6 können ggf. mit zusätzlichen Befestigungselementen die in vergleichbarer Weise wie das Verriegelungselement 12 eingreifen, zusätzliche wandförmige Raumtrennelemente oder dgl. eingesteckt werden.

Natürlich ist die Erfindung nicht auf das dargestellte Ausführungsbeispiel beschränkt. Weitere Ausgestaltungen sind möglich, ohne den Schutzbereich der Ansprüche zu verlassen. Erkennbar bietet das dargestellte Möbelsystem eine große Vielzahl von Variationsmöglichkeiten, indem grundsätzlich beliebig viele verschiedene kastenförmige Elemente mit Möbelböden 6 kombiniert werden, um aus einigen wenigen Grundbauelementen auf einfache Weise ohne Sonder- oder Zusatzbauteile ganz verschiedene Möbel zu realisieren.

### Bezugszeichenliste:

- 1: Möbelsystem
- 2: Kastenförmiges Element
- 3: Kastenförmiges Element
- 4: Kastenförmiges Element
- 5: Kastenförmiges Element
- 6: Möbelboden
- 6a, 6b: Teilböden
- 7: Verriegelungsprofil
- 7a: C-Stege
- 8: obere Nut
- 9: untere Nut
- 10: Verbindungssteg oder -zapfen
- 11: Öffnung
- 12: Verriegelungselement
- 13: Rastvorsprung
- 14: Federring
- 15: Rastnase
- 16: Führungshülse
- 17: Bund
- 18: Sechskant-Bohrung
- 19: Betätigungswerkzeug
- 20: Sechskantstiftansatz
- 21: Fußelement
- 22: Querträger
- 23: Fuß
- 24: Schraubhülse
- 25: Schraubstift
- 26: Verbindungselement (z. B. Schraube)
- 27: Zapfenelemente

## Patentansprüche

1. Modulares Möbelsystem, welches wenigstens zwei miteinander lösbar verbindbare, kastenförmige Elemente (2, 3, 4, 5) aufweist, wobei zur lösbaren Verbindung der wenigstens zwei kastenförmigen Elemente (2, 3, 4,5) wenigstens ein Möbelboden (6) vorgesehen ist, welcher entlang seiner Längserstreckung wenigstens ein Verriegelungsprofil (7) aufweist, in welches
ein durch wenigstens eine Öffnung (11) in der Ober- und/oder Unterwand des jeweiligen kastenförmigen Elementes (2,3,4,5) hindurchsteckbares Verriegelungselement (12) lösbar eingreift,
**dadurch gekennzeichnet,**
**dass** das Verriegelungsprofil (7) C-förmig oder Doppel-C-förmig ausgebildet ist und das Verriegelungselement (12) am vorderen, in das Verriegelungsprofil (7) eingreifenden Ende einen beidseitigen Rastvorsprung (13) aufweist, welcher durch Verdrehen des Verriegelungselementes (12) ein Einführen in das bzw. Verriegeln im Verriegelungsprofil (7) ermöglicht, wobei in die jeweilige Öffnung (11) in der Ober- und/oder Unterwand des jeweiligen kastenförmigen Elementes (2, 3, 4, 5) eine Führungshülse (16) für das Verriegelungselement (12) eingesetzt ist.

2. Möbelsystem nach Anspruch 1,
**dadurch gekennzeichnet,**
**dass** der jeweilige Möbelboden (6) aus wenigstens zwei in Längsrichtung über das Verriegelungsprofil (7) miteinander verbundenen Teilböden (6a, 6b) besteht.

3. Möbelsystem nach Anspruch 2,
**dadurch gekennzeichnet,**
**dass** das Verriegelungsprofil (7) an den beiden den Teilböden (6a, 6b) zugewandten Seiten jeweils Verbindungsstege oder -zapfen (10) für den jeweiligen Teilboden (6a, 6b) aufweist.

4. Möbelsystem nach Anspruch 1,
**dadurch gekennzeichnet,**
**dass** das Verriegelungselement (12) derart gestaltet ist, dass es in verriegelter Lage form- und kraftschlüssig im Verriegelungsprofil (7) gehalten ist.

5. Möbelsystem nach einem oder mehreren der Ansprüche 1 bis 4, **dadurch gekennzeichnet, dass** die Tiefe des jeweiligen Möbelbodens (6) der Tiefe des jeweiligen kastenförmigen Elementes (2, 3, 4, 5) entspricht.

6. Möbelsystem nach einem oder mehreren der Ansprüche 1 bis 5, **dadurch gekennzeichnet, dass** die Breite des jeweiligen kastenförmigen Elementes (2, 3, 4, 5) der Tiefe oder einer ganzzahligen Vielzahl der Tiefe des kastenförmigen Elementes (2, 3, 4, 5) entspricht.

7. Möbelsystem nach einem oder mehreren der Ansprüche 1 bis 6, **dadurch gekennzeichnet, dass** in das unterseitige Verriegelungsprofil (7) des untersten Möbelbodens (6) wenigstens zwei Fußelemente (21) eingesetzt sind, wobei jedes Fußelement (21) einen Querträger (22) mit endseitigen Füßen (23) und wenigstens einen mittigen Verbindungszapfen (26) zum Einsetzen in das Verriegelungsprofil (7) aufweist.

## Claims

1. Modular furniture system comprising at least two box-shaped elements (2, 3, 4, 5) releasably connectable to one another, wherein at least one furniture base (6) is provided for the releasable connection of the at least two box-shaped elements (2, 3, 4, 5), the furniture base comprising at least one locking profile (7) along its direction of elongation, into which a locking element (12) which can be inserted through at least one opening (11) in the upper wall and/or lower wall of the respective box-shaped element (2, 3, 4, 5) releasably engages,
**characterised in that**
the locking profile (7) has a C-shaped or double C-shaped configuration and the locking element (12) comprises on both sides a latching projection (13) at the front end engaging with the locking profile (7), the latching projection enabling insertion into the or locking in the locking profile (7) by rotating the locking element (12), wherein a guide sleeve (16) for the locking element (12) is inserted in the respective opening (11) in the upper wall and/or lower wall of the respective box-shaped element (2, 3, 4, 5).

2. Furniture system according to claim 1,
**characterised in that**
the respective furniture base (6) is formed of at least two partial bases (6a, 6b) which are connected to one another in the longitudinal direction via the locking profile (7).

3. Furniture system according to claim 2,
**characterised in that**
the locking profile (7) comprises connecting bars or pins (10) for the respective partial base (6a, 6b) at the two sides facing the partial bases (6a, 6b).

4. Furniture system according to claim 1,
**characterised in that**
the locking element (12) is configured such that in the locked condition it is held in the locking profile (7) in a formfitting and force-fitting manner.

5. Furniture system according to one or more of claims 1 to 4,
**characterised in that**
the depth of each respective furniture base (6) corresponds to the depth of the respective box-shaped element (2, 3, 4, 5).

6. Furniture system according to one or more of claims 1 to 5,
**characterised in that**
the width of each box-shaped element (2, 3, 4, 5) corresponds to the depth or an integer number of the depth of the box-shaped element (2, 3, 4, 5).

7. Furniture system according to one or more of claims 1 to 6,
**characterised in that**
at least two foot elements (21) are inserted into the base-side locking profile (7) of the lowest furniture base (6), wherein each foot element (21) comprises a crossbar (22) with feet (23) at the end and at least one central connecting pin (26) for inserting into the locking profile (7).

## Revendications

1. Système de meuble modulaire, qui présente au moins deux éléments en forme de boîte (2, 3, 4, 5) pouvant être reliés l'un à l'autre de manière amovible, dans lequel, pour la liaison amovible des au moins deux éléments en forme de boîte (2, 3, 4, 5), il est prévu au moins un fond de meuble (6) qui présente au moins un profil de verrouillage (7) le long de son étendue longitudinale, avec lequel un élément de verrouillage (12), pouvant être introduit à travers au moins une ouverture (11) dans la paroi supérieure et/ou inférieure de l'élément en forme de boîte (2, 3, 4, 5) respectif, vient en prise de manière amovible
**caractérisé en ce**
**que** le profil de verrouillage (7) est réalisé en forme de C ou en forme de double C et l'élément de verrouillage (12) présente, au niveau de l'extrémité avant venant en prise avec le profil de verrouillage (7), une saillie d'enclenchement (13) sur les deux côtés qui permet, par torsion de l'élément de verrouillage (12), une introduction dans ou un verrouillage dans le profil de verrouillage (7), dans lequel une douille de guidage (16) pour l'élément de verrouillage (12) est placée dans l'ouverture (11) respective dans la paroi supérieure et/ou inférieure de l'élément en forme de boîte (2, 3, 4, 5) respectif.

2. Système de meuble selon la revendication 1,
**caractérisé en ce**
**que** le fond de meuble (6) respectif est constitué d'au moins deux parties de fond (6a, 6b) reliées l'une à l'autre dans la direction longitudinale via le profil de verrouillage (7).

3. Système de meuble selon la revendication 2,
**caractérisé en ce**
**que** le profil de verrouillage (7) présente, au niveau des deux côtés faisant face aux parties de fond (6a, 6b), respectivement des barrettes de liaison ou des tourillons de liaison (10) pour la partie de fond (6a, 6b) respective.

4. Système de meuble selon la revendication 1,
**caractérisé en ce**
**que** l'élément de verrouillage (12) est configuré de telle manière qu'il est maintenu dans le profil de verrouillage (7) dans une position verrouillée par complémentarité de formes et de forces.

5. Système de meuble selon l'une ou plusieurs des revendications 1 à 4,
**caractérisé en ce**
**que** la profondeur du fond de meuble (6) respectif correspond à la profondeur de l'élément en forme de boîte (2, 3, 4, 5) respectif.

6. Système de meuble selon l'une ou plusieurs des revendications 1 à 5,
**caractérisé en ce**
**que** la largeur de l'élément en forme de boîte (2, 3, 4, 5) respectif correspond à la profondeur ou à un multiple entier de la profondeur de l'élément en forme de boîte (2, 3, 4, 5).

7. Système de meuble selon l'une ou plusieurs des revendications 1 à 6,
**caractérisé en ce**
**que**, dans le profil de verrouillage (7) inférieur du fond de meuble (6) inférieur, au moins deux éléments formant pieds (21) sont placés, dans lequel chaque élément formant pied (21) présente une traverse (22) avec des pieds côté extrémité (23) et au moins un tourillon de liaison médian (26) pour le placement dans le profil de verrouillage (7).
